# EUROPÄISCHE PATENTSCHRIFT

(11) **EP 3 762 593 B1**
(45) Veröffentlichungstag und Bekanntmachung des Hinweises auf die Patenterteilung: **06.04.2022**
(21) Anmeldenummer: 19744611.5
(22) Anmeldetag: 10.04.2019
(51) Int. Cl.: F01N 3/28, F01N 13/00, F02M 25/12, F01N 3/00, F01N 3/037

(54) **KATALYSATOR EINER VERBRENNUNGSKRAFTMASCHINE UND DEREN ABGASANLAGE**
CATALYTIC CONVERTER OF AN INTERNAL COMBUSTION ENGINE AND ASSOCIATED EXHAUST GAS SYSTEM
CATALYSEUR D'UN MOTEUR À COMBUSTION INTERNE ET SYSTÈME D'ÉCHAPPEMENT POUR CELUI-CI

(30) Priorität: 10.04.2018 DE 202018001792 U
(43) Veröffentlichungstag der Anmeldung: 13.01.2021
(73) Patentinhaber: Lohberg, Werner, 33102 Paderborn (DE)
(72) Erfinder: Lohberg, Werner, 33102 Paderborn (DE)
(74) Vertreter: Ostermann, Thomas
(86) Internationale Anmeldenummer: PCT/DE2019/000104
(87) Internationale Veröffentlichungsnummer: WO 2019/196969

(56) Entgegenhaltungen:
- EP-A2- 1 612 379
- WO-A1-2005/068818
- DE-A1-102005 022 163

## Beschreibung

Die Erfindung bezieht sich auf einen Katalysator für eine Verbrennungskraftmaschine zur Energiegewinnung aus der Verbrennung von Kraftstoff und Luft, wobei das entstehende Verbrennungsgas in einem Durchleitungsweg durch den Katalysator geleitet wird, an dem eine hochtemperaturfeste Diffusionsmembran angebracht ist, die an einen Regeneratsammler grenzt, der unter einem niedrigeren Druck als einem jeweils herrschenden Katalysatorinnendruck gehalten ist und ein so aus dem Verbrennungsgas abgesaugtes Regeneratgas der vorgeschalteten Verbrennungskraftmaschine als ein ergänzender Brennstoff zugeführt wird.

Bei heutigen Verbrennungskraftmaschinen, die mit einem Gemisch von Frischluft und Kohlenwasserstoff-Brennstoff betrieben werden, werden die Verbrennungsgase durch einen Katalysator hindurch geleitet, in dem unverbrannter Kohlenwasserstoff-Brennstoff und Verbrennungszwischenprodukte, wie NOx, schrittweise in schadstoffarme Abgasendprodukte, wie H 2 0-Dampf und N2, durch eine katalytische Nachverbrennung überführt werden. Durch die Nachverbrennung tritt im Katalysator gewöhnlich im laufenden Betrieb eine Temperatur von 600°C -1000°C auf und es herrscht in seinem Gehäuse gewöhnlich ein Druck von mehreren bar durch den Rückstau im anschließenden Schalldämpfer.

Die üblichen Katalysatoren bestehen aus einer engen großflächigen Lamellenträgerstruktur, die mit einem Platinmetall oder Metallgemisch als wirksames Katalysatormaterial dünn beschichtet ist. Für eine stöchiometrisch ausgewogene Zusammensetzung der Luft- und Brennstoffzufuhrsorgt eine Regelvorrichtung, der als Ist-Signal ein Messwert einer Abgassonde zugeführt wird, die den Gehalt an Schadstoffen, wie Kohlenmonoxid CO und Stickoxiden NOx, misst. Die thermische und chemische in dem Verbrennungsgas enthaltene Energie wird im Katalysator als nutzlose Wärmefreigesetzt. Rußpartikel werden kaum reduziert.

Es ist bekannt, einen Teil der heißen Verbrennungsgase abzuzweigen und der Frischluft beizumischen, wodurch ein Teil der in den Verbrennungsgasen enthaltenen Energie in dem folgenden Verbrennungsvorgang nutzbringend verwertet wird. Jedoch führt die durch die noch heißen Verbrennungsgase höhere Temperatur der der Verbrennungskraftmaschine zugeführten Luft zu einer geringeren Aufladung eines Verbrennungsmotors und damit zu einer Erniedrigung der Maximalleistung und in vielen Fällen zu einer erhöhten Bildung von Außpartikeln, die eine unerwünschte Energieverschiebung aus dem Verbrennungsraum in den Katalysator mit sich bringt.

So ist aus der Patentschrift DE 34 13 419 C2 bekannt, dem Vergaser eines Verbrennungsmotors mittels einer Abgasrückführleitung und einer zweiten Drosselklappe Abgase wieder zuzuführen, die damit in den Ansaugkanal des Verbrennungsmotors ergänzend eingespeist werden. Dies vennindert die Rußpartikel in den Abgasen nicht.

Weiterhin ist bekannt, etwa aus der Patentschrift DE 28 43 335 C2, dem Kraftstoff für die Verbrennung Wasser zuzuführen. Dadurch wird dir Verbrennungsluft gekühlt und die Energieausbeute verbessert. Das Wasser wird aber nicht in den Katalysationsprozess einbezogen.

Aus der WO 2005/068818 A1 ist ein Regenerator von Verbrennungsgasen mit einem Abgaskatalysator bekannt, bei dem aus dem Katalysator Regeneratgase abgesaugt und diese dem Verbrennungsmotor als ergänzender Brennstoff wieder zugeführt werden. Der Kraftstoffverbrauch wird mit der dort beschriebenen Konfiguration deutlich verringert und der Ausstoß von Stickoxiden gemindert.

Aus der DE 10 2005 022 163 A1 ist ein Katalysator für eine Verbrennungskraftmaschine bekannt, in der ein hochtemperaturfeste Diffusionsmembran angebracht ist. Diese Diffusionsmembran besteht aus einem hochtemperaturfestem Keramikmaterial, das mit einer Palladiumbeschichtung versehen ist. Nachteilig an dem bekannten Katalysator ist, dass die Haftungswirkung der Palladiumbeschichtung aufgrund der Wärme- und Temperaturschwankungen mit der Zeit abnimmt.

Es ist die Aufgabe der Erfindung, einen Katalysator sowie eine Abgasanlage derartzu verbessern, dass der Ausstoß von Rußpartikeln bei Verbrennungskraftmaschinen deutlich gemindert und der Kraftstoffverbrauch weiter reduziert wird.

Der erfindungsgemäße Katalysator ist für eine Verbrennungskraftmaschine zur Energiegewinnung aus der Verbrennung von Kraftstoff und Luft vorgesehen. Das dabei entstehende Verbrennungsgas wird in einem Durchleitungsweg durch den Katalysator geleitet, an dem eine hochtemperaturfeste Diffusionsmembran angebracht ist. Diese grenzt an einen Regeneratsammler, der unter einem niedrigeren Druck als einem jeweils herrschenden Katalysatorinnendruck gehalten ist. Ein so aus dem Verbrennungsgas abgesaugtes Regeneratgas wird der vorgeschalteten Verbrennungskraftmaschine als ein ergänzender Brennstoff zugeführt.

Der Katalysator zeichnet sich dadurch aus, dass in den Durchleitungsweg eine Wirbelkammer eingesetzt ist, an die die Diffusionsmembran grenzt und in der der Katalysatorinnendruck durch Hindernisse für das Verbrennungsgas erhöht ist. Weiterhin wird, in den Durchleitungsweg vor der Wirbelkammer, Wasser dem Verbrennungsgas in einem bestimmten Verhältnis zum verbrannten Kraftstoff zugesetzt.

Erfindungsgemäß ist die Diffusionsmembran aus mindestens einem Verbund von einer Lage eines feinen Metallgewebes gebildet, das in gröberes Metallgewebe eingefasst ist, wobei der Verbund mit Palladium beschichtet ist und an einer porösen Prall-Membranplatte anliegt, die die Wirbelkammer begrenzt und den Übergang zum Regeneratsammler darstellt. Durch den niedrigen Druck im Regeneratsammler wird mittels der Diffusionsmembran das energiehaltige Regeneratgas vorn Verbrennungsgas getrennt und wieder der Verbrennung zugeführt.

Durch die mittels der Hindernisse verzögerte Durchleitung der Verbrennungsgase und das Zusetzen des Wassers werden die Rußpartikel in dem Verbrennungsgas gelöst und, durch die hohe Temperatur in dem Katalysator zu N 2 , 0 2 und CO 2 reduziert. Es verbleiben daher nur sehr geringe Mengen Rußpartikeln im Abgas.

Die Diffusionsmembran trennt das viel Wasserstoff enthaltende Regeneratgas ab und dieses wird der Verbrennungskraftmaschine als zusätzlicher Brennstoff wieder zugeführt. Durch diese Maßnahme wird der Kraftstoffverbrauch deutlich gesenkt. In Versuchen wurde eine Einsparung von Kraftstoff von über 20% festgestellt.

Die Versuche haben auch ergeben, dass das Regeneratgas dem sehr heißen Katalysator mit Temperaturen zwischen 0°C und 15°C entnommen wird. Dieses kühle Gas kühlt die Ladeluft der Verbrennungskraftmaschine. Es kann also auf einen separaten Ladeluftkühler verzichtet werden. Das kühle Gas kann auch zu weiteren energetischen Zwecken, etwa dem Betrieb einer Klimaanlage, genutzt werden.

Eine Verwirbelungsscheibe bildet für das Verbrennungsgas in dem Durchleitungsweg den Eingang zur Wirbelkammer und stellt für das Verbrennungsgas ein Hindernis dar. Ausstanzungen in der Verwirbelungsscheibe sorgen für die gewünschten Wirbel der Verbrennungsgase in der Wirbelkammer, die die Rußpartikel an die keramische PrallMembranplatte bringen. Die Ausstanzungen sind bevorzugt als V-förmige Ausstanzungen gestaltet, was die Verwirbelung bewirkt.

Weiter ist vorgesehen, dass in Durchleitungsrichtung hinter der Wirbelkammer eine verstellbare Drosselklappe eingesetzt ist, die ein weiteres Hindernis darstellt und wodurch der Katalysatorinnendruck einstellbar ist. Je höher der Katalysatorinnendruck eingestellt ist, desto höher wird auch die Temperatur in dem Katalysator. Ein solches weiteres Hindernis kann anstelle einer Drosselklappe auch durch einen verschieblichen Absperrkolben gebildet sein.

Die Bildung von Regeneratgas wird weiter verbessert, indem in die Diffusionsmembran drei Verbünde von Metallgeweben eingesetzt werden. Zwischen den Verbünden befindet sich jeweils eine hochtemperaturfeste Dichtung, die beispielsweise aus Glimmer besteht. Die Diffusionsmembran wird dabei von einer Spannfeder im Regeneratsammler gegen die Prall-Membranplatte gepresst.

In der Diffusionsmembran besitzt das feine, mit Palladium versehene Metallgewebe Öffnungen, deren Weite zwischen 0,2g und 0,5g liegt. Diese Weiten haben sich als sehr effektiv für die Bildung von Regeneratgas erwiesen.

Optional ist in dem Durchleitungsweg vor der Wirbelkammer eine Flammkerze eingesetzt ist, die eine Vorwärmung des Katalysators ermöglicht. Damit werden die Kaltstarteigenschaften der Verbrennungskraftmaschine wesentlich verbessert. Die katalytischen Prozesse beginnen kurze Zeit nach dem Kaltstart.

In dem Durchleitungsweg des Katalysators ist vor der Wirbelkammer eine Einspritzdüse zur Einspritzung des Wassers eingesetzt. Das Wasser wird ionisiert und mischt sich mit dem Verbrennungsgas, wobei die Rußpartikel gelöst werden. Sie reichem das Regeneratgas mit Energie an. Dadurch wird entsprechend Kraftstoff eingespart. Dabei ist es günstig, die Wassereinspritzung so zu steuern, dass das Verhältnis von Wasser zu Kraftstoff 1:20 beträgt.

Anfallendes überschüssiges Wasser im Abgas hinter dem Katalysator wird vorteilhaft über ein Zyklon extrahiert, um es weiter nutzen zu können.

Dazu wird das extrahierte Wasser in einem Wassertank gesammelt und der Einspritzdüse über eine Wasserpumpe wieder zugeführt. Es wird also wiederverwendet.

Der vorstehend beschriebene Katalysator wird in der Abgasanlage einer Verbrennungskraftmaschine eingesetzt. Für einen guten Wirkungsgrad der Verbrennungskraftmaschine wird die Frischluft für die Verbrennung über einen Turbolader oder einen Radialverdichter komprimiert und damit die Verbrennungskraftmaschine aufgeladen.

In die Luftleitung hinter dem Turbolader und vor der Verbrennungskraftmaschine ist vorteilhaft eine Venturi-Düse eingesetzt. Über diese wird das Regeneratgas mit der Frischluft vermischt und so als zusätzlicher Brennstoff der Verbrennungskraftmaschine zugeführt. Auf diese Weise wird entsprechend Kraftstoff eingespart.

In den Figuren wird eine beispielhafte Ausführung des erfindungsgemäßen Katalysators sowie eine damit versehene Abgasanlage dargestellt.
Es zeigen:
Fig. 1 einen Schnitt durch einen Katalysator;
Fig. 2 einen Detailschnitt durch die Diffusionsmembran;
Fig. 3 eine schematische Darstellung einer Abgasanlage mit Regeneratgasrückführung.

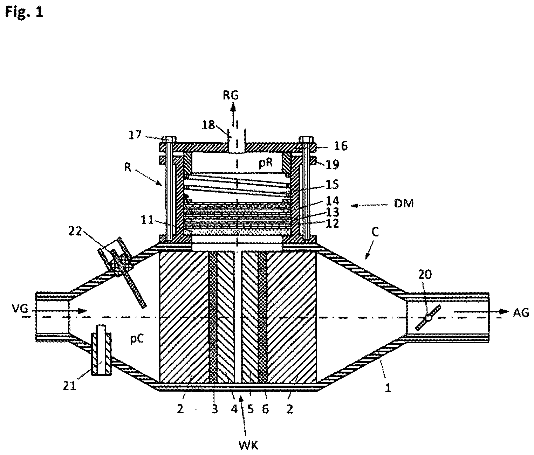

In Fig. 1 ist ein Schnitt durch einen Katalysator C mit einer Wirbelkammer WK im Gehäuse 1 und einem aufgesetzten Regeneratsammler R dargestellt. Auf seinem Durchleitungsweg durch den Katalysator C gelangt das Verbrennungsgas VG an normales Katalysatorgewebe 2. Aus der Wasserdüse 21 wird Wasser in den Katalysator C eingeführt, das sich mit dem Verbrennungsgas VG mischt und ionisiert. Das Gemisch wird nun mit dem Katalysatorinnendruck pC durch die Verwirbelungsscheibe 3 gedrückt und gelangt so durch eine Keramikscheibe 4 mit größeren Löchern in die Wirbelkammer WK . Diese wird auf der anderen Seite durch eine Keramikplatte 5 mit kleineren Löchern und eine Lochscheibe 6 begrenzt. Die Wirbelkammer WK ist oben durch die poröse Prall-Membranplatte 11 begrenzt, auf die der Regeneratsammler R aufgesetzt ist. Auf der Prall-Membranplatte 11 ist in dem Gehäuse 19 des Regeneratsammlers R die Diffusionsmembran DM aufgespannt, die aus drei Verbünden von feinem Metallgewebe 12 und umschlingenden groben Metallgewebe13 bestehen, die jeweils von einer hochtemperaturfesten Dichtung 14 gehalten sind. Die Verbünde sind mit Palladium beschichtet, wodurch die Bildung des Regeneratgases RG erfolgt, das über den Regenerat-Auslass 18 mit dem niedrigen Regenratgasdruck pR abgesaugt wird.

Die Spannung der Diffusionsmembran DM erfolgt mit der Spannfeder 15, die mittels der Abschlussplatte 16 und den Spannschrauben 17 eingestellt wird.

Hinter der Wirbelkammer WK wird nun das Abgas AG, dem das energiereiche Regeneratgas RG entzogen ist, durch weiteres Katalysatorgewebe 2 weitergeleitet. Im Ausgang des Katalysators C ist die Drosselklappe 20 eingesetzt, durch die der Druck pC im Gehäuse 1 des Katalysators C eingestellt werden kann. Je höher der Druck pC im Katalysator ist, desto heißer wird der Katalysator C und entsprechend wird Regeneratgas RG gebildet.

Am Eingang des Katalysators C ist in das Gehäuse 1 eine Flammkerze 22 eingesetzt, die den Katalysator C vorheizen kann. Darüber wird die Kaltstartphase verkürzt und die Bildung von Regenratgas RG beginnt kurz nach einem Start des Betriebes des Katalysators C.

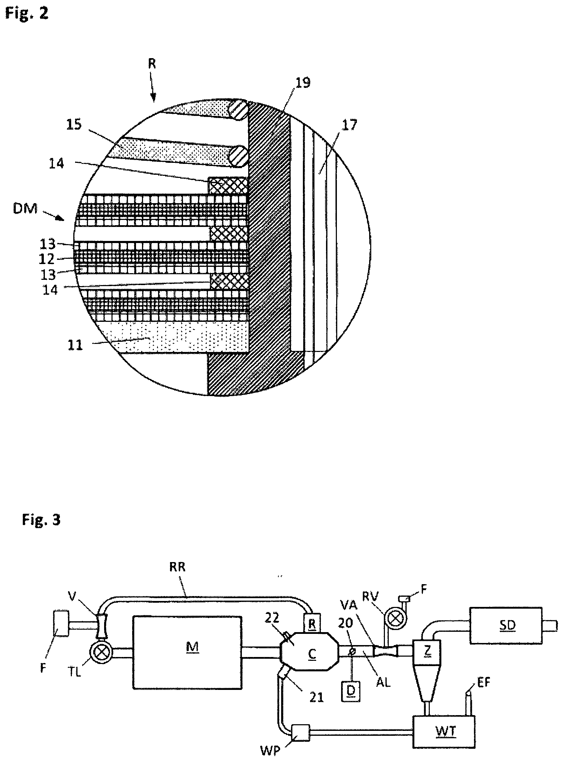

Fig. 2 zeigt einen Detailschnitt durch die Diffusionsmembran DM mit ihrem Einbau in das Gehäuse 19 des Regenratsammlers R. Auf der Prall-Membranplatte 11 ist die Diffusionsmembran DM aufgespannt, die aus drei Verbünden von feinem Metallgewebe 12 und umschlingenden groben Metallgewebe13 bestehen, die jeweils von einer hochtemperaturfesten Dichtung 14 , etwa Glimmer, gehalten sind. Die Verbünde sind mit Palladium beschichtet, wodurch die Bildung des Regeneratgases RG erfolgt. Eine hochtemperaturfeste Dichtung 14 befindet sich jeweils zwischen den Verbünden.

Mittels der Spannfeder 15 sind die Verbünde auf die Prall-Membranplatte 11 aufgespannt. Die Spannung wird mittels der Spannfeder 17 eingestellt.

In Fig. 3 ist eine schematische Darstellung einer Abgasanlage mit Regeneratgasrückführung gezeigt. Die Frischluft für die Verbrennungskraftmaschine M wird über den Frischluftfilter F angesaugt, mittels des Turboladers TL verdichtet und der Verbrennungskraftmaschine M zugeführt. Deren Verbrennungsgase gelangen zum Katalysator C, in den über die Wasserdüse 21 Wasser eingeführt wird, das sich mit den Verbrennungsgasen vermischt und ionisiert.

In dem Regeneratsammler R wird aus dem Gemisch das Regenratgas gebildet und über das Rückführungsrohr RR mittels einer Venturidüse V auch dem Turbolader TL eingespeist. Es wird mit der Frischluft gemischt und der Verbrennungskraftmaschine M als zusätzlicher Brennstoff zugeführt.

In der Abgasleitung AL des Katalysators C befindet sich eine Drosselklappe 20, die über die Drosselklappensteuerung D eingestellt wird. Dies erfolgt günstigerweise zusammen mit einer Leistungssteuerung der Verbrennungskraftmaschine M.

Die Abgasleitung AL des Katalysators C führt zu einem Zyklon Z , in dem überschüssiges Wasser im Abgas ausgeschieden wird. Mittels eines Radialverdichters RV wird über eine Venturidüse VA in die Abgasleitung AL zusätzlich Frischluft F eingeführt und so mit erhöhtem Druck die Geschwindigkeit im Zyklon Z erhöht und die Wasserausscheidung im Zyklon Z verbessert. Das ausgeschiedene Wasser wird einem Wassertank WT zugeführt, in den über einen Einfüllstutzen EF weiteres Wasser gespeichert wird. Aus diesem Wassertank WT wird mittels einer Wasserpumpe WP der Wasserdüse 21 Wasser zugeführt und in den Katalysator C eingespritzt, wo es aufgrund der hohen Temperatur sofort verdampft und sich mit dem Verbrennungsgasen vermischt. Dabei beträgt das Verhältnis von verbranntem Kraftstoff zu eingespritztem Wasser 1:20, was über eine nicht dargestellte Steuerung erreicht wird. Bei einem solchen Verhältnis werden die Rußpartikel im Verbrennungsgas weitestgehend im Dampf gelöst und bilden das energiereiche Regeneratgas.

Das entwässerte Abgas aus dem Zyklon Z wird über einen Schalldämpfer SD in die Umwelt abgegeben. Rußpartikel sind aus diesem Abgas weitgehend eliminiert.

### Bezugszeichenliste

- 1: Gehäuse des Katalysators
- 2: Katalysator-Gewebe
- 3: Verwirbelungsscheibe
- 4: Keramikscheibe mit größeren Löchern
- 5: Keramikscheibe mit kleineren Löchern
- 6: Lochscheibe
- 11: Prall-Membranplatte
- 12: Feines Metallgewebe
- 13: Grobes Metallgewebe
- 14: Hochtemperaturfeste Dichtung, Glimmer
- 15: Spannfeder
- 16: Abschlussplatte
- 17: Spannschraube
- 18: Regeneratgas-Auslass
- 19: Gehäuse des Regeneratsammlers
- 20: Drosselklappe
- 21: Wasserdüse
- 22: Flammkerze

- AG: Abgas
- AL: Abgasleitung
- C: Katalysator
- D: Drosselklappensteuerung
- DM: Diffusionsmembran
- EF: Einfüllstutzen für Wasser
- F: Frischluft
- M: Verbrennungskraftmaschine
- pC: Druck im Katalysator
- pR: Druck im Regeneratsammler
- R: Regenratsammler
- RG: Regeneratgas
- RR: Rückführungsrohr
- RV: Raidalverdichter
- SD: Schalldämpfer
- TL: Turbolader
- V: Venturidüse
- VA: Venturidüse in der Abgasleitung
- VG: Verbrennungsgas
- WK: Wirbelkammer
- WP: Wasserpumpe
- WT: Wassertank
- Z: Zyklon

## Patentansprüche

1. Katalysator (C) für eine Verbrennungskraftmaschine (M) zur Energiegewinnung aus der Verbrennung von Kraftstoff und Luft, wobei das entstehende Verbrennungsgas (VG) in einem Durchleitungsweg durch den Katalysator (C) geleitet wird, an dem eine hochtemperaturfeste Diffusionsmembran (DM) angebracht ist, die an einen Regeneratsammler (R) grenzt, der unter einem niedrigeren Druck (pR) als einem jeweils herrschenden Katalysatorinnendruck (pC) gehalten ist und ein so aus dem Verbrennungsgas (VG) abgesaugtes Regeneratgas (RG) der vorgeschalteten Verbrennungskraftmaschine (M) als ein ergänzender Brennstoff zugeführt wird, **dadurch gekennzeichnet, dass** in den Durchleitungsweg eine Wirbelkammer (WK) eingesetzt ist, die an die Diffusionsmembran (DM) grenzt und in der der Katalysatorinnendruck (pC) durch Hindernisse für das Verbrennungsgas (VG) erhöht ist, und dass in den Durchleitungsweg vor der Wirbelkammer (WK) Wasser dem Verbrennungsgas (VG) in einem bestimmten Verhältnis zum verbrannten Kraftstoff zugesetzt wird, und dass die Diffusionsmembran (DM) aus mindestens einem Verbund von einer Lage eines feinen Metallgewebes (12), das in gröberes Metallgewebe (13) eingefasst ist, gebildet ist, wobei der Verbund mit Palladium beschichtet ist, und an einer porösen Prall-Membranplatte (1 1) anliegt, die die Wirbelkammer (WK) begrenzt.

2. Katalysator nach Anspruch 1, **dadurch gekennzeichnet, dass** eine in den Durchleitungsweg eingesetzte Verwirbelungsscheibe (3) ein Hindernis für das Verbrennungsgas (VG) bildet und diese einen Eingang in die Wirbelkammer (WK) darstellt.

3. Katalysator nach Anspruch 2, **dadurch gekennzeichnet, dass** die Verwirbelungsscheibe (3) V-förmige Durchbrüche besitzt.

4. Katalysator nach Anspruch 1, **dadurch gekennzeichnet, dass** in Durchleitungsrichtung hinter der Wirbelkammer (WK) eine verstellbare Drosselklappe (20) eingesetzt ist, durch die der Katalysatorinnendruck (pC) einstellbar ist.

5. Katalysator nach einem der Ansprüche 1 bis 4, **dadurch gekennzeichnet, dass** die Diffusionsmembran (DM) drei Verbünde von Metallgeweben (12, 13) besitzt.

6. Katalysator nach einem der Ansprüche 1 bis 5, **dadurch gekennzeichnet, dass** das feine Metallgewebe (12) Öffnungen besitzt, deren Weite zwischen 0,2g und 0,5p, liegt.

7. Katalysator nach einem der Ansprüche 1 bis 6, **dadurch gekennzeichnet, dass** sich zwischen den Lagen der Verbünde jeweils eine hochtemperaturfeste Dichtung (14) befindet.

8. Katalysator nach einem der Ansprüche 1 bis 7, **dadurch gekennzeichnet, dass** in dem Durchleitungsweg vor der Wirbelkammer (WK) eine Flammkerze (22) eingesetzt ist, die eine Vorwärmung des Katalysators (C) ermöglicht.

9. Katalysator nach einem der Ansprüche 1 bis 8, **dadurch gekennzeichnet, dass** in dem Durchleitungsweg vor der Wirbelkammer (WK) eine Einspritzdüse (21) zur Einspritzung des Wassers eingesetzt ist.

10. Abgasanlage mit einem Katalysator (C) nach Anspruch 9, **dadurch gekennzeichnet, dass** das Verhältnis von Kraftstoff zu Wasser in etwa 1:20 beträgt.

11. Abgasanlage nach Anspruch 10, **dadurch gekennzeichnet, dass** überschüssiges Wasser im Abgas (AG) durch einen Zyklon (Z) extrahiert wird.

12. Abgasanlage nach Anspruch 11, **dadurch gekennzeichnet, dass** das überschüssige Wasser in einem Wassertank (WT) gesammelt und der Wasserdüse (21) über eine Wasserpumpe (WP) wieder zugeführt wird.

13. Abgasanlage nach Anspruch 10 4 , **dadurch gekennzeichnet, dass** die Luft für die Verbrennungskraftmaschine (M) über einen Turbolader (K) komprimiert wird.

14. Abgasanlage nach Anspruch 13, **dadurch gekennzeichnet, dass** die Luft für die Verbrennungskraftmaschine (M) über das Regeneratgas (RG) gekühlt wird, so dass keine weitere Kühlung der Ladeluft erforderlich ist.

15. Abgasanlage nach Anspruch 14, **dadurch gekennzeichnet, dass** das Regeneratgas (RG) der Verbrennungskraftmaschine (M) über eine Venturi-Düse (V) am Turbolader (TL) zugeführt wird.

## Claims

1. A catalytic converter (C) for an internal combustion engine (M) for obtaining energy from the combustion of fuel and air, wherein the resulting combustion gas (VG) is guided through the catalytic converter (C) in a conducting path at which a high-temperature resistant diffusion membrane (DM) is attached which borders on a regrind collector (R) which is maintained under a lower pressure (pR) than a general catalytic converter internal pressure (pC) and a regrind gas (RG) of the downstream internal combustion engine (M) suctioned from the combustion gas (VG) is thus added as a supplementary combustible fuel, **characterized in that** a swirl chamber (WK) is inserted into the conducting path, said swirl chamber bordering on the diffusion membrane (DM) and in which the catalytic converter internal pressure (pC) is increased by obstacles for the combustion gas (VG), and **in that** water is added to the combustion gas (VG) into the conducting path in front of the swirl chamber (WK) in a certain ratio to the burned fuel, and **in that** the diffusion membrane (DM) is formed from at least one grouping of a layer of a fine metal mesh (12) that is surrounded by more coarse metal mesh (13), wherein the grouping is coated with palladium, and adjoins a porous impact membrane plate (11) which delimits the swirl chamber (WK).

2. The catalytic conductor according to Claim 1, **characterized in that** a swirl disc (3) inserted into the conducting path forms an obstacle for the combustion gas (VG) and is an entrance into the swirl chamber (WK).

3. The catalytic conductor according to Claim 2, **characterized in that** the swirl disc (3) has V-shaped apertures.

4. The catalytic conductor according to Claim 1, **characterized in that** an adjustable throttle valve is inserted behind the swirl chamber (WK) in the direction of conduction though which throttle valve the catalytic converter internal pressure (pC) can be set.

5. The catalytic conductor according to any one of Claims 1 to 4, **characterized in that** the diffusion membrane (DM) has three groupings of metal meshes (12, 13).

6. The catalytic conductor according to any one of Claims 1 to 5, **characterized in that** the fine metal mesh (12) has openings, the breadth of which is between 0.2g and 0.5p.

7. The catalytic conductor according to any one of Claims 1 to 6, **characterized in that** a high-temperature resistant seal (14) is located between each of the layers of the groupings.

8. The catalytic conductor according to any one of Claims 1 to 7, **characterized in that** a spark plug (22) is inserted in the conduction path in front of the swirl chamber (WK), which enables a pre-heating of the catalytic conductor (C).

9. The catalytic conductor according to any one of Claims 1 to 8, **characterized in that** an injection nozzle (21) for injecting the water is inserted in the conduction path in front of the swirl chamber (WK).

10. An exhaust gas system with a catalytic conductor (C) according to Claim 9, **characterized in that** the ratio of fuel to water is approximately 1:20.

11. The exhaust gas system according to Claim 10, **characterized in that** excess water in the exhaust gas (AG) is extracted through a cyclone (Z).

12. The exhaust gas system according to Claim 11, **characterized in that** the excess water is collected in a water tank (WT) and re-added to the water nozzle (21) via a water pump (WP).

13. The exhaust gas system according to Claim 10, **characterized in that** the air for the internal combustion engine (M) is compressed via a turbocharger (K).

14. The exhaust gas system according to Claim 13, **characterized in that** the air for the internal combustion engine (M) is cooled via the regrind gas (RG) such that no further cooling of the charging air is necessary.

15. The exhaust gas system according to Claim 14, **characterized in that** the regrind gas (RG) of the internal combustion engine (M) is added via a Venturi nozzle (V) at the turbocharger (TL).

## Revendications

1. Catalyseur (C) pour un moteur à combustion interne (M) pour la production d'énergie à partir de la combustion de carburant et d'air, le gaz de combustion formé (VG) étant conduit dans une voie de passage à travers le catalyseur (C), sur lequel est disposée une membrane de diffusion (DM) résistante aux hautes températures, qui est adjacente à un collecteur de régénérat (R), qui est maintenu sous une pression (pR) inférieure à une pression interne du catalyseur (pC) régnant à chaque fois et un gaz de régénérât (RG) ainsi aspiré à partir du gaz de combustion (VG) étant amené au moteur à combustion interne (M) placé en amont en tant que combustible complémentaire, **caractérisé en ce que en ce qu'**une chambre de turbulence (WK) est insérée dans la voie de passage, qui est adjacente à la membrane de diffusion (DM) et dans laquelle la pression interne du catalyseur (pC) est augmentée par des obstacles pour le gaz de combustion (VG), et **en ce que**, dans la voie de passage avant la chambre de turbulence (WK), de l'eau est ajoutée au gaz de combustion (VG) en un rapport déterminé par rapport au carburant brûlé, et **en ce que** la membrane de diffusion (DM) est formée d'au moins un composite d'une couche de tissu métallique fin (12), qui est enchâssée dans un tissu métallique plus grossier (13), le composite étant revêtu de palladium, et reposant sur une plaque de membrane d'impact poreuse (11), qui délimite la chambre de turbulence (WK).

2. Catalyseur selon la revendication 1, **caractérisé en ce qu'**un disque de turbulence (3) inséré dans la voie de passage forme un obstacle pour le gaz de combustion (VG) et celui-ci constitue une entrée dans la chambre de turbulence (WK).

3. Catalyseur selon la revendication 2, **caractérisé en ce que** le disque de turbulence (3) possède des ajours en forme de V.

4. Catalyseur selon la revendication 1, **caractérisé en ce qu'**un clapet d'étranglement ajustable (20) est inséré à l'arrière de la chambre de turbulence (WK) dans la direction de passage, par lequel la pression interne du catalyseur (pC) peut être ajustée.

5. Catalyseur selon l'une quelconque des revendications 1 à 4, **caractérisé en ce que** la membrane de diffusion (DM) possède trois composites de tissus métalliques (12, 13).

6. Catalyseur selon l'une quelconque des revendications 1 à 5, **caractérisé en ce que** le tissu métallique fin (12) possède des ouvertures, dont la largeur est comprise entre 0,2 g et 0,5 p.

7. Catalyseur selon l'une quelconque des revendications 1 à 6, **caractérisé en ce qu'**un joint d'étanchéité (14) résistant aux hautes températures se trouve à chaque fois entre les couches des composites.

8. Catalyseur selon l'une quelconque des revendications 1 à 7, **caractérisé en ce qu'**une bougie à flamme (22) est insérée dans la voie de passage avant la chambre de turbulence (WK), qui permet un préchauffage du catalyseur (C).

9. Catalyseur selon l'une quelconque des revendications 1 à 8, **caractérisé en ce qu'**une buse d'injection (21) est insérée dans la voie de passage avant la chambre de turbulence (WK) pour injecter l'eau.

10. Système d'échappement comprenant un catalyseur (C) selon la revendication 9, **caractérisé en ce que** le rapport du carburant à l'eau est d'environ 1:20.

11. Système d'échappement selon la revendication 10, **caractérisé en ce que** l'eau en excès dans le gaz d'échappement (AG) est extraite par un cyclone (Z).

12. Système d'échappement selon la revendication 11, **caractérisé en ce que** l'eau en excès est collectée dans un réservoir d'eau (WT) et réacheminée vers la buse d'eau (21) par l'intermédiaire d'une pompe à eau (WP).

13. Système d'échappement selon la revendication 10, **caractérisé en ce que** l'air destiné au moteur à combustion interne (M) est comprimé par l'intermédiaire d'un turbocompresseur (K).

14. Système d'échappement selon la revendication 13, **caractérisé en ce que** l'air destiné au moteur à combustion interne (M) est refroidi par l'intermédiaire du gaz de régénérât (RG), de telle sorte qu'aucun autre refroidissement de l'air de suralimentation n'est nécessaire.

15. Système d'échappement selon la revendication 14, **caractérisé en ce que** le gaz de régénérât (RG) est amené au moteur à combustion interne (M) par l'intermédiaire d'une buse Venturi (V) sur le turbocompresseur (TL).
